# EUROPEAN PATENT APPLICATION

(11) **EP 3 933 348 A1**
(43) Date of publication of application: **05.01.2022**
(21) Application number: 20763351.2
(22) Date of filing: 14.01.2020
(51) Int. Cl.: G01D 5/353

(54) **OPTICAL FIBER SENSING SYSTEM**

(30) Priority: 28.02.2019 JP 2019036933
(71) Applicant: NEC Corporation, 108-8001 Tokyo (JP)
(72) Inventor: YODA Yukihide, Tokyo 108-8001 (JP); AONO Yoshiaki, Tokyo 108-8001 (JP); ISHII Satoru, Tokyo 108-8001 (JP)
(74) Representative: Reeve, Nicholas Edward
(86) International application number: PCT/JP2020/000885
(87) International publication number: WO 2020/174903

(57) **Abstract**

An optical fiber sensing system according to the present disclosure includes a sensing optical fiber (20), a medium (10) with which the sensing optical fiber (20) is integrated, and which is arranged in a monitoring target (50), an optical fiber detection unit (30) which is connected to the sensing optical fiber (20) integrated with the medium (10), the optical fiber detection unit (30) is configured to receive an optical signal from the sensing optical fiber (20), and detect a pattern according to a state of the monitoring target (50), contained in the optical signal, and a state detection unit (40) configured to detect a state of the monitoring target (50), based on the pattern contained in the optical signal.

## Description

### Technical Field

The present disclosure relates to an optical fiber sensing system.

### Background Art

There is a technique being referred as optical fiber sensing using an optical fiber as a sensor. The optical fiber sensing is utilized for detecting a state or the like of a monitoring target.

Herein, when a monitoring target is an infrastructural structure such as a road, a railroad, a telephone pole, a tunnel, or a bridge, an existing optical fiber (e.g., an existing communication optical fiber) may be laid in the monitoring target. In this case, detection of a state or the like of the monitoring target is possible by making use of the existing optical fiber as a sensor.

However, in recent years, in an optical fiber sensing system, monitoring targets have been diversified, and an existing optical fiber is not necessarily laid near a monitoring target.

Thus, recently, flexibly and easily building an optical fiber sensing system has been required.

For example, a technique described in Patent Literature 1 can be cited as a technique for flexibly and easily building an optical fiber sensing system. The technique described in Patent Literature 1 places, in a monitoring area, a person detection sensor including an optical fiber fixed onto a sheet surface. When there is a person on a floor surface of the monitoring area, the person detection sensor is deformed, bending occurs at an optical fiber, and, as a result, power of an optical signal transmitted through the optical fiber fluctuates. The technique described in Patent Literature 1 detects presence or absence of a person in the monitoring area by detecting the fluctuation of the power of the optical signal.

### Citation List

### Patent Literature

[Patent Literature 1] Japanese Unexamined Patent Application Publication No. 2005-184772

### Summary of Invention

### Technical Problem

However, a technique described in Patent Literature 1 performs detection of presence or absence of a person by monitoring power fluctuation of an optical signal when strong stress is applied to an optical fiber.

Thus, there is a problem that, in a monitoring area, such an extreme state that strong stress is applied to an optical fiber can be detected, but detection of such a state as to hardly influence stress on an optical fiber is difficult.

Accordingly, an object of the present disclosure is to provide an optical fiber sensing system that solves the above-described problem, and can detect a state of a monitoring target with a high degree of accuracy.

### Solution to Problem

An optical fiber sensing system according to one aspect includes:
a sensing optical fiber;
a medium that is integrated with the sensing optical fiber, and is arranged in a monitoring target;
an optical fiber detection unit that is connected to the sensing optical fiber integrated with the medium, the optical fiber detection unit is configured to receive an optical signal from the sensing optical fiber, and detect a pattern according to a state of the monitoring target, contained in the optical signal; and
a state detection unit configured to detect a state of the monitoring target, based on the pattern contained in the optical signal.

### Advantageous Effects of Invention

According to the above-described aspect, an advantageous effect can be acquired in which an optical fiber sensing system that can detect a state of a monitoring target with a high degree of accuracy can be provided.

### Brief Description of the Drawings

Fig. 1 is a top view illustrating a configuration example of a medium according to an example embodiment.
Fig. 2 is a cross-sectional view illustrating a configuration example of a sticking-type medium according to the example embodiment.
Fig. 3 is a cross-sectional view illustrating a configuration example of an embedded-type medium according to the example embodiment.
Fig. 4 is a diagram illustrating a configuration example of an optical fiber sensing system according to the example embodiment.
Fig. 5 is a diagram illustrating an example of a monitoring point of a monitoring target in which a medium according to the example embodiment is arranged.
Fig. 6 is a diagram illustrating an example of a unique pattern according to a deterioration state of a monitoring target.
Fig. 7 is a diagram illustrating another example of a unique pattern according to a deterioration state of a monitoring target.
Fig. 8 is a diagram illustrating an example of an arrangement pattern of a sensing optical fiber in a medium (sheet) according to the example embodiment.
Fig. 9 is a diagram illustrating another example of an arrangement pattern of a sensing optical fiber in a medium (sheet) according to the example embodiment.
Fig. 10 is a diagram illustrating still another example of an arrangement pattern of a sensing optical fiber in a medium (sheet) according to the example embodiment.
Fig. 11 is a diagram illustrating an example in which a plurality of media (plates) according to the example embodiment are combined and arranged in a floor or the like of a monitoring target area.
Fig. 12 is a diagram illustrating an example of detecting a state of a person sitting on a chair, in the optical fiber sensing system according to the example embodiment.
Fig. 13 is a diagram illustrating an example of a part information table used in the example of Fig. 12.
Fig. 14 is a diagram illustrating an example of detecting a state of a person lying on a bed, in the optical fiber sensing system according to the example embodiment.
Fig. 15 is a diagram illustrating an example of a part information table used in the example of Fig. 14.
Fig. 16 is a diagram illustrating an example of detecting a deterioration state of a bridge, in the optical fiber sensing system according to the example embodiment.
Fig. 17 is a diagram illustrating an example of detecting outflow of fluid from a pipeline, in the optical fiber sensing system according to the example embodiment.
Fig. 18 is a diagram illustrating an example of detecting a fire early, in the optical fiber sensing system according to the example embodiment.
Fig. 19 is a diagram illustrating an example of detecting unauthorized invasion into an airport, in the optical fiber sensing system according to the example embodiment.
Fig. 20 is a flow diagram illustrating an example of an operation flow of the optical fiber sensing system according to the example embodiment.

### Description of Embodiments

Hereinafter, an example embodiment of the present disclosure is described with reference to the drawings.

### <Example Embodiment>

### <Basic Configuration according to Example Embodiment>

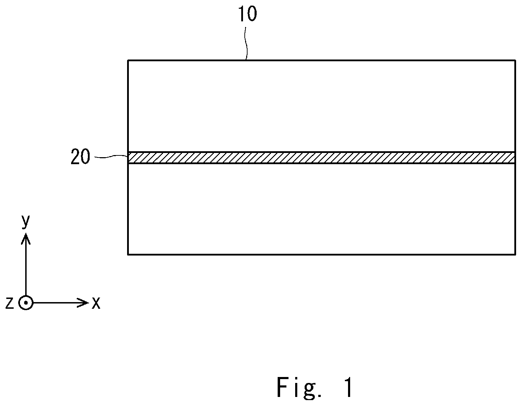

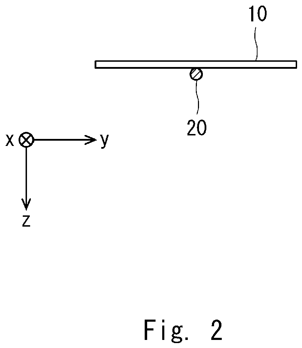

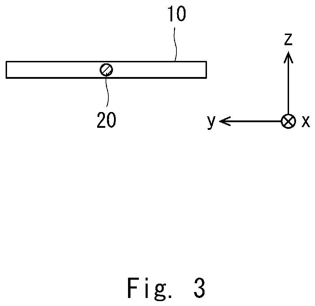

First, a configuration of a medium 10 used in an optical fiber sensing system according to the present example embodiment is described with reference to Figs. 1 to 3. Fig. 1 is a top view of a medium 10, Fig. 2 is a cross-sectional view of the sticking-type medium 10, and Fig. 3 is a cross-sectional view of the embedded-type medium 10.

As illustrated in Fig. 1, the medium 10 is a sheet or a plate with which a sensing optical fiber 20 is integrated.

Moreover, as illustrated in Fig. 2, the medium 10 may be a sticking type in which the sensing optical fiber 20 is stuck to a surface of the medium 10. Alternatively, as illustrated in Fig. 3, the medium 10 may be an embedded type in which the sensing optical fiber 20 is embedded in the medium 10.

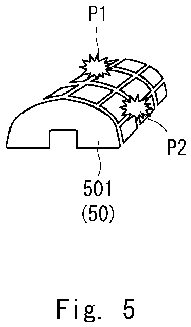

Moreover, the medium 10 is arranged in a monitoring target 50 (see Fig. 5 and the like). The medium 10 may be only put on the monitoring target 50, or may be fixed to the monitoring target 50. A fixing portion for fixing the medium 10 to the monitoring target 50 may be, for example, an adhesive material, and, more specifically, may be an adhesive agent. For example, when the fixing portion is an adhesive agent, the adhesive agent is applied to an adhesion surface of the medium 10, and the medium 10 is stuck to the monitoring target 50 by the adhesive agent. However, a method of fixing the medium 10 to the monitoring target 50 is not limited thereto.

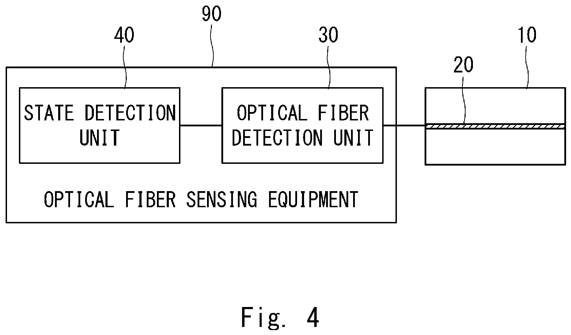

Further, a configuration of the optical fiber sensing system according to the present example embodiment is described with reference to Fig. 4.

As illustrated in Fig. 4, the optical fiber sensing system according to the present example embodiment includes the medium 10 with which the sensing optical fiber 20 is integrated, and optical fiber sensing equipment 90. Moreover, the optical fiber sensing equipment 90 includes an optical fiber detection unit 30 and a state detection unit 40.

The medium 10 is arranged in the monitoring target 50. The monitoring target 50 is, for example, an infrastructural structure such as a road, a railroad, a telephone pole, a tunnel, or a bridge, a building such as a floor or a wall, a piece of furniture such as a table, a chair, or a bed, or the like. Moreover, since vibration or the like differs at each position of the monitoring target 50, the medium 10 may be arranged at each of a plurality of monitoring points, for one monitoring target 50. Fig. 5 is an example of arranging the medium 10 at each of monitoring points P1 and P2 in two places of a tunnel 501 when the monitoring target 50 is the tunnel 501.

The sensing optical fiber 20 is connected to the optical fiber detection unit 30. The sensing optical fiber 20 may be directly connected to the optical fiber detection unit 30, or may be indirectly connected to the optical fiber detection unit 30 via an existing optical fiber connected to the optical fiber detection unit 30. The existing optical fiber may be a communication optical fiber, or may be a sensing optical fiber previously laid for monitoring the monitoring target 50. Each of connection between the sensing optical fiber 20 and the optical fiber detection unit 30 and connection between the sensing optical fiber 20 and the existing optical fiber may be connection using a splice, or may be connection using a connector.

The optical fiber detection unit 30 brings pulsed light into the sensing optical fiber 20. Moreover, the optical fiber detection unit 30 receives, from the sensing optical fiber 20, backward reflected light occurred at each transmission distance due to transmission of the pulsed light through the sensing optical fiber 20.

Herein, when vibration, sound, temperature, stress, and the like occur in the monitoring target 50, the vibration, sound, temperature, stress, and the like are transmitted to the sensing optical fiber 20, and superimposed on backward reflected light transmitted by the sensing optical fiber 20.

Thus, each of parameters of the vibration, sound, temperature, stress, and the like in the monitoring target 50 is superimposed on backward scattered light received by the optical fiber detection unit 30. At this point, a pattern contained in each parameter in the monitoring target 50 is a dynamically fluctuating fluctuation pattern, and differs according to a state of the monitoring target 50. For example, when a parameter is vibration, detecting transition of fluctuation in strength and weakness of the vibration, a vibration position, the number of vibrations, and the like enables defining a dynamic unique pattern of vibration occurred in the monitoring target 50.

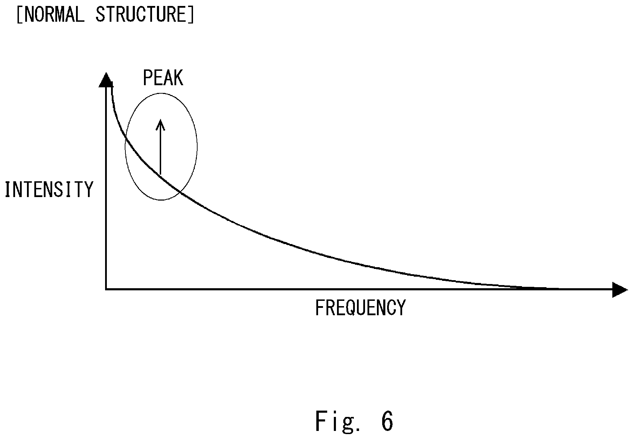

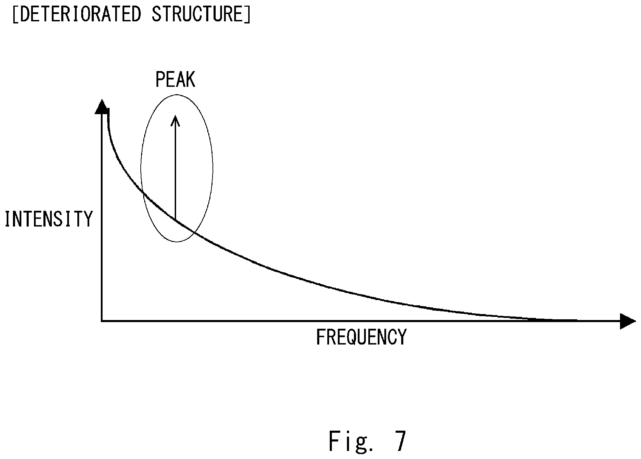

Thus, the optical fiber detection unit 30 detects a dynamic unique pattern of vibration in the monitoring target 50 according to a state or the like of the monitoring target 50, by use of, for example, a distributed vibration sensor and the like, based on backward scattered light received from the sensing optical fiber 20. Figs. 6 and 7 are examples of dynamic unique patterns of vibration when the monitoring target 50 is an infrastructural structure such as a tunnel, and each illustrate vibration data (frequency on a horizontal axis, and intensity (amplitude) on a vertical axis) after vibration data (time on a horizontal axis, and intensity (amplitude) on a vertical axis) of the infrastructural structure are subjected to fast Fourier transform (FFT). In the vibration data illustrated in Figs. 6 and 7, a peak of intensity occurs, and a frequency at which the peak occurs differs according to a deterioration state of the infrastructural structure. Thus, the optical fiber detection unit 30 detects a dynamic unique pattern of vibration according to a deterioration state of the infrastructural structure, and this allows the state detection unit 40 at a subsequent stage to detect a deterioration state of the infrastructural structure.

Moreover, the optical fiber detection unit 30 may detect a multiplex unique pattern of the monitoring target 50 by detecting a dynamic unique pattern such as sound, temperature, and stress in the monitoring target 50 together, by use of a distributed acoustic sensor, a distributed temperature sensor, and the like. This allows the state detection unit 40 to detect a state of the monitoring target 50 with a higher degree of accuracy.

Moreover, the optical fiber detection unit 30 can also specify, based on, for example, a time difference between a time at which pulsed light is brought into the sensing optical fiber 20, and a time at which backward scattered light is received from the sensing optical fiber 20, a position where the backward scattered light occurs. Consequently, the optical fiber detection unit 30 is also capable of specifying a position of the monitoring target 50.

The state detection unit 40 detects a state of the monitoring target 50, based on a unique pattern according to a state of the monitoring target 50 detected by the optical fiber detection unit 30. For example, in each of the above-described examples of Figs. 6 and 7, a deterioration state of the monitoring target 50 is detected, based on a frequency at which a peak on vibration data occurs.

Moreover, the state detection unit 40 may detect a state of the monitoring target 50 by utilizing pattern matching. In other words, the state detection unit 40 may compare a unique pattern according to a state of the monitoring target 50 with a previously set matching pattern, and detect a specific state of the monitoring target 50 when the unique pattern matches the matching pattern. At this point, the state detection unit 40 may determine whether the unique pattern matches the matching pattern, by calculating a rate of matching the matching pattern with regard to the unique pattern according to a state of the monitoring target 50, and comparing the matching rate with a threshold value. For example, in an example of a table 1, the state detection unit 40 determines that a pattern matches when a matching rate is equal to or more than 70%, determines that a pattern does not match when a matching rate is equal to or less than 40%, and determines that there is a possibility of matching when a matching rate is between 40% and 70%.

**[Table 1]**

| Matching rate | Match/not match |
|---|---|
| Equal to or more than 70% | Match |
| 40% to 70% | There is a possibility of matching |
| Equal to or less than 40% | Not match |

Moreover, a matching pattern may be learned by machine learning. Further, a matching pattern may be updated at any time by machine learning, or may be added.

As described above, in the optical fiber sensing system according to the present example embodiment, a state of the monitoring target 50 can be detected only by arranging the medium 10 in the monitoring target 50, and connecting the sensing optical fiber 20 integrated with the medium 10 to the optical fiber detection unit 30. This allows an optical fiber sensing system to be flexibly and easily built.

Moreover, in the optical fiber sensing system according to the present example embodiment, the optical fiber detection unit 30 detects a pattern according to a state of the monitoring target 50, based on backward scattered light received from the sensing optical fiber 20, and the state detection unit 40 detects a state of the monitoring target 50, based on the detected pattern. In other words, the state detection unit 40 detects a state of the monitoring target 50, for example, not by detecting a state with such a broad criterion as whether vibration is large or small (e.g., specifying a state by largeness of vibration and a high number of vibrations) but by pattern-analyzing a change of a parameter dynamically (e.g., transition of a change in strength and weakness of vibration, and the like). This allows a state of the monitoring target 50 to be detected with a high degree of accuracy.

The optical fiber sensing system according to the present example embodiment is described below in more detail.

### <When Medium 10 is Sheet 10A>

The medium 10 may be a sheet 10A. Moreover, since the sheet 10A is small in thickness, it is preferable that the sheet 10A is a sticking type in which the sensing optical fiber 20 is stuck to a surface of the sheet 10A, but the sheet 10A may be an embedded type.

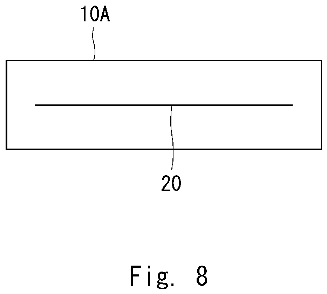

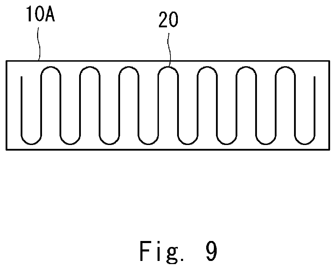

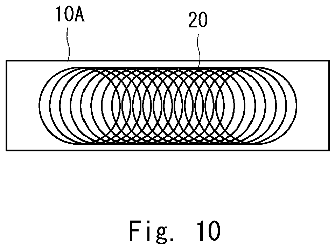

Arrangement patterns of the sensing optical fiber 20 integrated with the sheet 10A may be various patterns. For example, the sensing optical fiber 20 may have a linear arrangement pattern as illustrated in Fig. 8, may have an arrangement pattern with a folded structure as illustrated in Fig. 9, or may have an arrangement pattern with a helical structure as illustrated in Fig. 10. Among the patterns, the patterns with the folded structure and the helical structure illustrated in Figs. 9 and 10 improve density of the sensing optical fiber 20, and, therefore, enable improving detection sensitivity of the monitoring target 50. Moreover, an arrangement pattern of the sensing optical fiber 20 may be used according to a shape of the monitoring target 50 and a pattern that is desired to be arranged in the monitoring target 50.

Moreover, a plurality of the sheets 10A may be combined and arranged in the monitoring target 50. In this case, the sensing optical fibers 20 in a plurality of the sheets 10A are connected in a one-stroke form. Connection of the sensing optical fibers 20 in the adjacent sheets 10A may be connection using a splice. Consequently, an optical fiber sensing system can be flexibly built without needing a complex construction. In this case, an arrangement pattern of the sensing optical fiber 20 in each of a plurality of the sheets 10A may be any arrangement pattern, and is not particularly limited. For example, the sensing optical fiber 20 in each of all of a plurality of the sheets 10A may have the same arrangement pattern or may have a differing arrangement pattern, or some of the sensing optical fibers 20 may have the same arrangement pattern, and the other may have differing arrangement patterns.

### <When medium 10 is plate 10B>

The medium 10 may be a plate 10B made of a material (e.g., concrete, resin, metal, and the like) having thickness. Moreover, since the plate 10B has thickness, it is preferable that the plate 10B is an embedded type in which the sensing optical fibers 20 is embedded in the plate 10B, but the plate 10B may be a sticking type.

Moreover, a plurality of the plates 10B may be combined and arranged in the monitoring target 50 being a floor or the like of a monitoring target area. In this case, the sensing optical fibers 20 in a plurality of the plates 10B are connected in a one-stroke form. Connection of the sensing optical fibers 20 in the adjacent plates 10B may be connection using a connector. Consequently, an optical fiber sensing system can be flexibly built without needing a complex construction. In this case, an arrangement pattern of the sensing optical fiber 20 in each of a plurality of the plates 10B may be any arrangement pattern, and is not particularly limited. For example, the sensing optical fiber 20 in each of all of a plurality of the plates 10B may have the same arrangement pattern or may have a differing arrangement pattern, or some of the sensing optical fibers 20 may have the same arrangement pattern, and the other may have differing arrangement patterns.

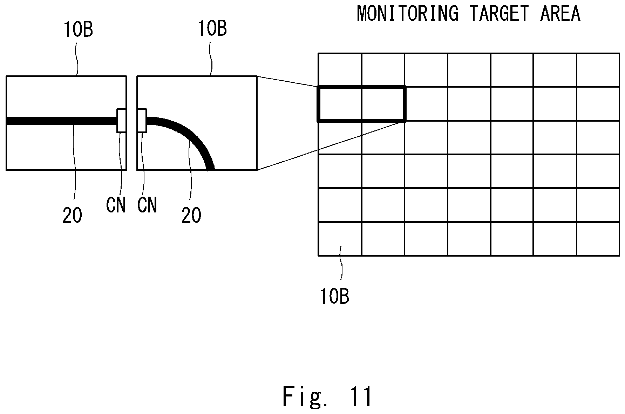

Fig. 11 illustrates an example in which a plurality of the plates 10B are combined and arranged in the monitoring target 50 being a floor or the like of a monitoring target area.

In the example of Fig. 11, a plurality of the plates 10B are arranged in a lattice form in the monitoring target 50 being a floor or the like of a monitoring target area. In this case, the sensing optical fibers 20 in a plurality of the plates 10B are connected in a one-stroke form. Moreover, an arrangement pattern of the sensing optical fiber 20 in each of a plurality of the plates 10B may be any arrangement pattern, as described above. For example, in the example of Fig. 11, while the sensing optical fiber 20 has a linear arrangement pattern in one of the adjacent plates 10B, the sensing optical fiber 20 has an arc-form arrangement pattern in the other of the adjacent plates 10B. Moreover, the sensing optical fibers 20 of the adjacent plates 10B are connected by use of a connector CN.

### <Application Achievable by Optical Fiber Sensing System>

Further, an application achievable by the optical fiber sensing system according to the present example embodiment is described.

### (1) State detection of person

For example, when the monitoring target 50 is a chair or a bed, a state of a person sitting on a chair or a person lying on a bed (a physical condition or an action of a person) can be detected by the optical fiber sensing system according to the present example embodiment. Herein, an example of using the sheet 10A as the medium 10 is described.

### (1A) When monitoring target 50 is chair

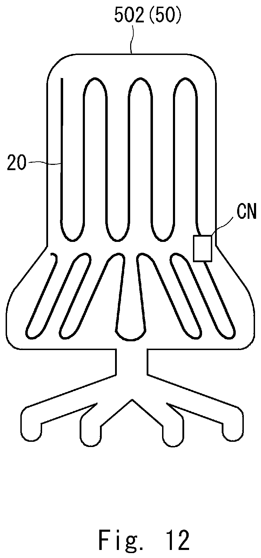

First, an example of detecting a state of a person sitting on a chair 502 when the monitoring target 50 is the chair 502 is described with reference to Fig. 12.

In the example of Fig. 12, the sheet 10A is stuck to the chair 502 in such a way that the sensing optical fibers 20 extend from a connector CN in two directions, one of the sensing optical fibers 20 is arranged in a seating surface portion of the chair 502, and the other sensing optical fiber 20 is arranged in a back plate portion of the chair 502. The connector CN is connected to the optical fiber detection unit 30.

Herein, while the optical fiber detection unit 30 is capable of detecting an occurrence position (a distance from the optical fiber detection unit 30) of backward scattered light as described above, it is necessary to specify which part of a body the occurrence position of the backward scattered light is in, in order to detect a state of a person.

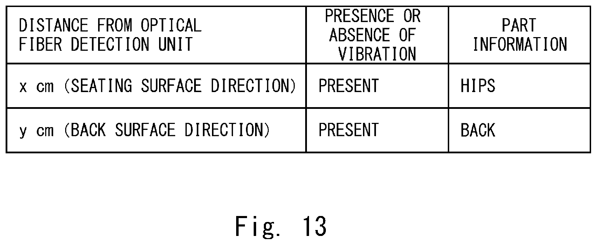

Thus, the state detection unit 40 previously holds a part information table associating a distance from the optical fiber detection unit 30 with part information indicating a part of a body being located at the distance, and specifies the part of the body by use of the part information table. Fig. 13 illustrates an example of a part information table. Moreover, the part information table illustrated in Fig. 13 is a table in which a part of a body is specified on condition that vibration is present. In other words, the state detection unit 40 determines whether a person is sitting by presence or absence of vibration, and specifies a part of a body according to the part information table, when vibration is present. Note that, it is preferable that the part information table is a table generated based on a size of a standard body of a person sitting on the chair 502 by determining the size of the standard body from a size or type of the chair 502.

The state detection unit 40 specifies a part to be an occurrence position of backward scattered light by use of the above-described part information table, and detects a state of a person sitting on the chair 502, based on a unique pattern occurred in the specified part.

### (1B) When monitoring target 50 is bed

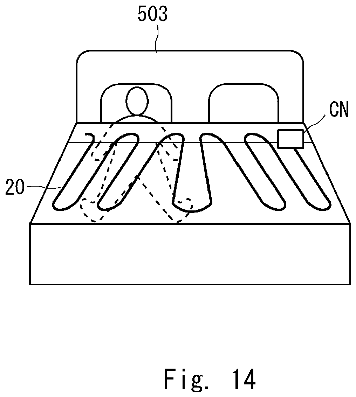

Further, an example of detecting a state of a person lying on a bed 503 when the monitoring target 50 is the bed 503 is described with reference to Fig. 14.

In the example of Fig. 14, the sheet 10A is stuck to the bed 503 in such a way that the sensing optical fiber 20 is arranged in a mattress of the bed 503. A connector CN is attached to an end of the sensing optical fiber 20, and the connector CN is connected to the optical fiber detection unit 30.

Herein, in a case of the bed 503 as well as in the chair 502, it is necessary to specify which part of a body an occurrence position of backward scattered light is in, in order to detect a state of a person.

When a person lies on the bed 503, vibration along a body of the person occurs in the bed 503.

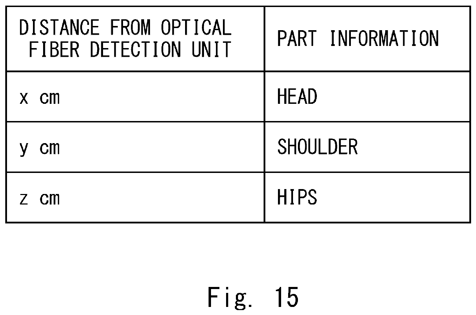

Thus, the state detection unit 40 derives a distribution of an occurrence place of vibration occurred in the bed 503, and estimates, based on the distribution, a shape of a body of a person lying on the bed 503. Then, the state detection unit 40 generates a part information table as illustrated in Fig. 15, based on an estimation result of the shape of the body of the person. The part information table illustrated in Fig. 15 is a table associating a distance from the optical fiber detection unit 30 with part information indicating a part of a body being located at the distance.

The state detection unit 40 specifies a part to be an occurrence position of backward scattered light by use of the above-described part information table, and detects a state of a person lying on the bed 503, based on a unique pattern occurred in the specified part.

### (2) Deterioration state detection of infrastructural structure

Moreover, when the monitoring target 50 is an infrastructural structure such as a road, a railroad, a telephone pole, a tunnel, or a bridge, a deterioration state of the infrastructural structure can be detected by the optical fiber sensing system according to the present example embodiment. Herein, an example of using the sheet 10A as the medium 10 is described.

Fig. 5 described above is an example of sticking the sheet 10A to each of the monitoring points P1 and P2 in two places of the tunnel 501 when the monitoring target 50 is the tunnel 501, and detecting a deterioration state of the tunnel 501.

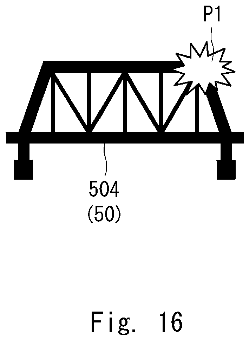

In addition, for example, as illustrated in Fig. 16, when the monitoring target 50 is a bridge 504, it is also possible to stick the sheet 10A to the monitoring point P1 of the bridge 504, and detect a deterioration state of the bridge 504.

Note that, although it is possible to detect a deterioration state of the infrastructural structure by use of, for example, each of the methods described with Figs. 6 and 7, the present disclosure is not limited to the example.

### (3) Outflow detection of pipeline

Moreover, when the monitoring target 50 is a pipeline that transports fluid such as oil or natural gas, outflow of the fluid from the pipeline can be detected by the optical fiber sensing system according to the present example embodiment. Herein, an example of using the sheet 10A as the medium 10 is described.

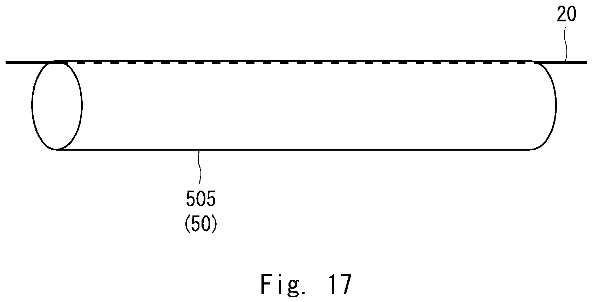

For example, as illustrated in Fig. 17, when the monitoring target 50 is a pipeline 505, the sheet 10A is stuck to an inner surface of the pipeline 505 in such a way that the sensing optical fiber 20 is arranged in the inner surface of the pipeline 505 along the pipeline 505.

When fluid flows out from the pipeline 505, a local temperature change occurs. Thus, the state detection unit 40 monitors whether a local temperature change is detected in the sensing optical fiber 20, and determines that outflow of fluid from the pipeline 505 has occurred when a local temperature change is detected. Moreover, since the optical fiber detection unit 30 can specify a position where a local temperature change occurs (a distance from the optical fiber detection unit 30), the state detection unit 40 can specify, in a short period of time, a position where fluid has flowed out.

### (4) Sign detection of fire

Moreover, when the monitoring target 50 is a room, a fire having a possibility of occurring in the room can be detected early by the optical fiber sensing system according to the present example embodiment. Herein, an example of using the sheet 10A as the medium 10 is described.

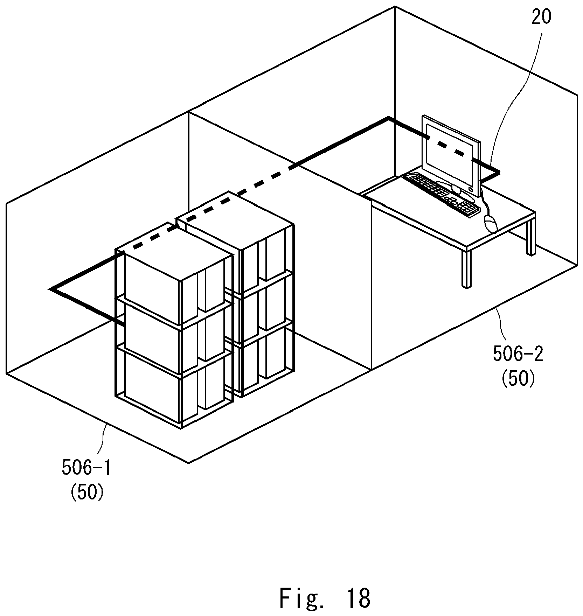

For example, as illustrated in Fig. 18, it is assumed that the monitoring targets 50 are two rooms including a server room 506-1 and an office room 506-2. In this case, the sheet 10A is stuck in such a way that the sensing optical fiber 20 is arranged over the two rooms including the server room 506-1 and the office room 506-2. Note that, although the sensing optical fiber 20 is arranged on walls of the two rooms, a server in the server room 506-1, and a computer in the office room 506-2 in Fig. 18, the present disclosure is not limited thereto. The sensing optical fiber 20 may be arranged on ceilings of the two rooms.

The state detection unit 40 monitors a temperature detected in the sensing optical fiber 20, and determines that there is a possibility that a fire occurs when a temperature higher than a normal temperature is detected. Moreover, the optical fiber detection unit 30 is capable of specifying a position (a distance from the optical fiber detection unit 30) where a temperature higher than a normal temperature is detected. Thus, the state detection unit 40 can specify a room where there is a possibility that a fire occurs, by previously holding a room information table associating a distance from the optical fiber detection unit 30 with a room being located at the distance.

Note that, when determining that there is a possibility that a fire occurs, the state detection unit 40 may notify insides of the server room 506-1 and the office room 506-2, a monitoring center, and the like of the fact as an alarm.

### (5) Unauthorized invasion detection

In protection of a building and an outer periphery thereof, monitoring of a battlefield and a border, and the like, unauthorized invasion detection is an important security task. Moreover, in an oil industry and a gas industry as well, unauthorized invasion detection is needed in a scene such as protection of an offshore platform and a generation facility.

When the monitoring target 50 is an important facility, unauthorized invasion into the important facility can be detected by the optical fiber sensing system according to the present example embodiment.

For example, when an important facility is an airport, a port, a power plant, a border, or the like on ground, sticking the sheet 10A to a fence, or embedding the sheet 10A or the plate 10B in ground around the fence can be conceived.

Moreover, when an important facility is an underground facility, a tunnel, or the like in ground, sticking the sheet 10A to inside of a structure, or embedding the sheet 10A or the plate 10B in ground around the structure can be conceived.

Moreover, when an important facility is an offshore oil platform, a submarine cable landing station, or the like under water, sticking the sheet 10A to a fence or a facility, or embedding the sheet 10A or the plate 10B in ground around the fence or the facility can be conceived.

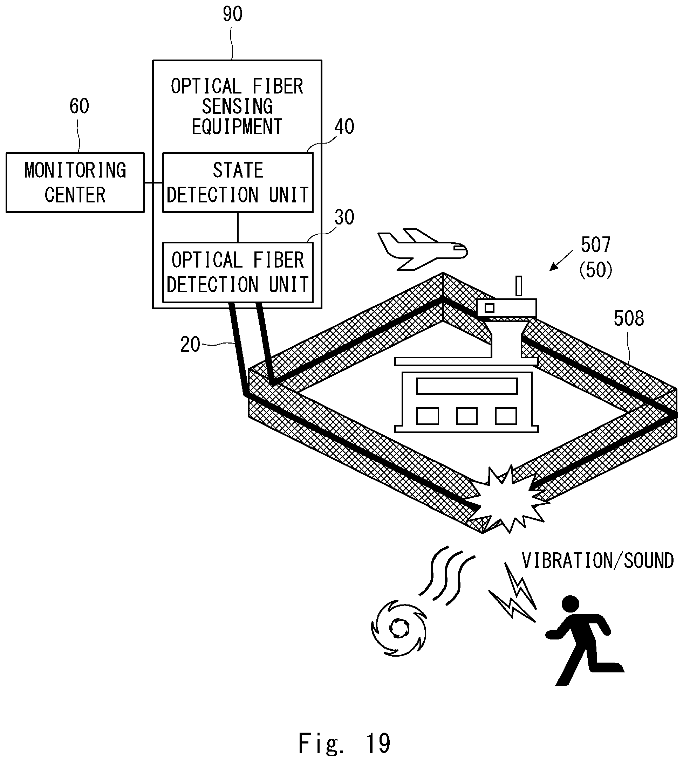

For example, as illustrated in Fig. 19, it is assumed that the monitoring target 50 is an airport 507. In this case, the sensing optical fiber 20 is arranged by sticking the sheet 10A to a fence 508 surrounding the airport 507, and vibration and sound occurred in the fence 508 and therearound are detected by the sensing optical fiber 20.

The state detection unit 40 detects, for example, the following predetermined events, based on unique patterns of vibration and sound occurred in the fence 508 and therearound.
(1) A person grasps and shakes the fence 508
(2) A person hits the fence 508
(3) A person climbs up the fence 508
(4) A person places a ladder against the fence 508, and climbs the ladder
(5) A person prowls around the fence 508
(6) A person digs around the fence 508

When detecting a predetermined event as described above, the state detection unit 40 determines that the event is unauthorized invasion into the airport 507. Moreover, when determining that the event is unauthorized invasion into the airport 507, the state detection unit 40 may notify a monitoring center 60 of the fact as an alarm.

### <Operation according to Example Embodiment>

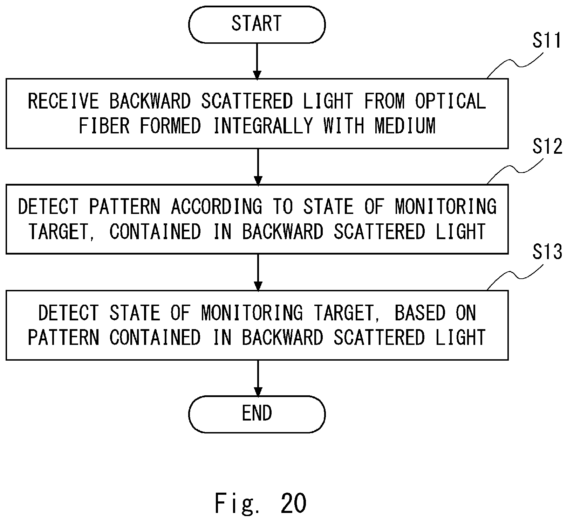

An operation flow of a schematic operation of the optical fiber sensing system according to the present example embodiment is described below with reference to Fig. 20. Note that, Fig. 20 illustrates an operation after the medium 10 is arranged in the monitoring target 50, and the sensing optical fiber 20 integrated with the medium 10 is connected to the optical fiber detection unit 30.

As illustrated in Fig. 20, first, the optical fiber detection unit 30 brings pulsed light into the sensing optical fiber 20 integrated with the medium 10 arranged in the monitoring target 50, and receives backward scattered light from the sensing optical fiber 20 (step S11).

Further, the optical fiber detection unit 30 detects a pattern according to a state of the monitoring target 50, contained in the received backward scattered light (step S12).

Thereafter, the state detection unit 40 detects a state of the monitoring target 50, based on the pattern contained in the backward scattered light (step S13). At this point, as described above, the state detection unit 40 may detect a state of the monitoring target 50 by utilizing pattern matching. In other words, the state detection unit 40 may compare a unique pattern according to a state of the monitoring target 50 with a matching pattern, and detect a specific state of the monitoring target 50 when the unique pattern matches the matching pattern.

### <Advantageous Effect of Example Embodiment>

As described above, according to the present example embodiment, the sensing optical fiber 20 integrated with the medium 10 arranged in the monitoring target 50 is connected to the optical fiber detection unit 30, the optical fiber detection unit 30 detects a pattern according to a state of the monitoring target 50, contained in backward scattered light (an optical signal) received from the sensing optical fiber 20, and the state detection unit 40 detects a state of the monitoring target 50, based on the pattern contained in the backward scattered light.

Thus, a state of the monitoring target 50 can be detected only by arranging the medium 10 in the monitoring target 50, and connecting the sensing optical fiber 20 integrated with the medium 10 to the optical fiber detection unit 30. This allows an optical fiber sensing system to be flexibly and easily built.

Moreover, according to the present example embodiment, the state detection unit 40 detects a state of the monitoring target 50, based on a pattern according to a state of the monitoring target 50, contained in backward scattered light. In other words, the state detection unit 40 detects a state of the monitoring target 50, for example, not by detecting a state with such a broad criterion as whether vibration is large or small (e.g., specifying a state by largeness of vibration and a high number of vibrations) but by pattern-analyzing a change of a parameter dynamically (e.g., transition of a change in strength and weakness of vibration, and the like). This allows a state of the monitoring target 50 to be detected with a high degree of accuracy.

While the present disclosure has been described above with reference to the example embodiment, the present disclosure is not limited to the above-described example embodiment. Various changes that may be understood by a person skilled in the art can be made to a configuration and details according to the present disclosure within the scope of the present disclosure.

For example, although the optical fiber sensing equipment 90 includes the optical fiber detection unit 30 and the state detection unit 40 in the above-described example embodiment, the present disclosure is not limited thereto. The optical fiber detection unit 30 and the state detection unit 40 may be each achieved by a separate device.

Moreover, the present disclosure is also capable of achieving any processing of the optical fiber detection unit 30 and the state detection unit 40 by reading and executing, with a processor such as a central processing unit (CPU), a computer program stored in a memory such as a random access memory (RAM) or a read only memory (ROM).

The above-described program can be stored by use of various types of non-transitory computer-readable media, and supplied to a computer. The non-transitory computer-readable media include various types of tangible storage media. Examples of the non-transitory computer-readable media include a magnetic recording medium (e.g., a flexible disk, a magnetic tape, and a hard disk drive), a magneto-optical recording medium (e.g., a magneto-optical disk), a compact disc-read only memory (CD-ROM), a CD-recordable (CD-R), a CD-rewritable (CD-R/W), and a semiconductor memory (e.g., a mask ROM, a programmable ROM (PROM), an erasable PROM (EPROM), a flash ROM, and a random access memory (RAM). Moreover, the above-described program may be supplied to a computer by various types of transitory computer readable media. Examples of the transitory computer readable media include an electric signal, an optical signal, and an electromagnetic wave. The transitory computer readable medium can supply a program to a computer via a wired communication path such as an electric wire or an optical fiber, or a wireless communication path.

This application is based upon and claims the benefit of priority from Japanese Patent Application No. 2019-036933, filed on February 28, 2019, the disclosure of which is incorporated herein in its entirety by reference.

### Reference Signs List

- 10: Medium
- 10A: Sheet
- 10B: Plate
- 20: Sensing optical fiber
- 30: Optical fiber detection unit
- 40: State detection unit
- 50: Monitoring target
- 501: Tunnel
- 502: Chair
- 503: Bed
- 504: Bridge
- 505: Pipeline
- 506-1: Server room
- 506-2: Office room
- 507: Airport
- 508: Fence
- 60: Monitoring center
- 90: Optical fiber sensing equipment
- CN: Connector

## Claims

1. An optical fiber sensing system comprising:
a sensing optical fiber;
a medium that is integrated with the sensing optical fiber, and is arranged in a monitoring target;
an optical fiber detection unit that is connected to the sensing optical fiber integrated with the medium, the optical fiber detection unit is configured to receive an optical signal from the sensing optical fiber, and detect a pattern according to a state of the monitoring target, contained in the optical signal; and
a state detection unit configured to detect a state of the monitoring target, based on the pattern contained in the optical signal.

2. The optical fiber sensing system according to Claim 1, further comprising a fixing portion for fixing the medium to the monitoring target,
wherein the fixing portion is an adhesive material.

3. The optical fiber sensing system according to Claim 1 or 2, wherein a plurality of the media are combined and arranged in the monitoring target.

4. The optical fiber sensing system according to Claim 3, wherein the sensing optical fibers in a plurality of the media combined and arranged in the monitoring target are connected in a one-stroke form.

5. The optical fiber sensing system according to Claim 3 or 4, wherein an arrangement pattern of the sensing optical fibers in a plurality of the media combined and arranged in the monitoring target is any pattern.

6. The optical fiber sensing system according to any one of Claims 1 to 5, further comprising an optical fiber being connected to the optical fiber detection unit, wherein
the sensing optical fiber is connected to the optical fiber, and
the optical fiber detection unit is connected to the sensing optical fiber via the optical fiber.

7. The optical fiber sensing system according to any one of Claims 1 to 6, wherein the medium is a sheet or a plate.
